# FASCICULE DE BREVET EUROPEEN

(11) **EP 0 449 695 B1**
(45) Date de publication et mention de la délivrance du brevet: **24.05.1995**
(21) Numéro de dépôt: 91400694.5
(22) Date de dépôt: 14.03.1991
(51) Int. Cl.: C04B 35/52, C04B 35/80

(54) **Procédé de conformation d'une texture fibreuse de renfort pour la fabrication d'une pièce en matériau composite**
Verfahren zur Verfestigung einer faserigen Armierungsstruktur für die Herstellung eines Verbundwerkstoffteils
Method of strengthening a fibrous reinforcing texture for the fabrication of a composite material part

(30) Priorité: 26.03.1990 FR 9003837
(43) Date de publication de la demande: 02.10.1991
(73) Titulaire: SOCIETE EUROPEENNE DE PROPULSION, 92150 Suresnes (FR)
(72) Inventeur: Patrigeon, Yves D., F-33200 Bordeaux Cauderan (FR); Vives, Michel C., F-33320 Eysines (FR)
(74) Mandataire: Joly, Jean-Jacques

(56) Documents cités:
- EP-A- 0 349 245
- CH-A- 436 092
- DE-A- 2 722 575
- US-A- 4 318 948

## Description

La présente invention concerne la fabrication de pièces en matériau composite comportant une texture fibreuse de renfort densifiée par une matrice.

Plus particulièrement, l'invention concerne un procédé du type comportant la conformation de la texture fibreuse de renfort, suivie de la densification de la texture par infiltration chimique en phase vapeur.

Un tel procédé est notamment utilisé pour la fabrication de pièces en matériaux composites thermostructuraux, c'est-à-dire des matériaux aptes à constituer des éléments de structure et à conserver leurs propriétés mécaniques à des températures élevées.

Les matériaux composites thermostructuraux comprennent notamment les composites de type carbone-carbone (C-C) et les composites à matrice céramique (CMC).

Dans un composite de type C-C, la texture de renfort est en fibres de carbone et est densifiée par du carbone tandis que, dans un CMC, la texture de renfort est en fibres réfractaires (carbone ou céramique) et est densifiée par une matrice céramique.

Lorsque les pièces en matériau composite thermostructural sont fabriquées par infiltration chimique en phase vapeur du matériau constitutif de la matrice, au sein de la porosité accessible de la texture de renfort, celle-ci est généralement maintenue en forme par un outillage, habituellement en graphite. L'outillage permet de réaliser la conformation de la texture de renfort fibreux, pour lui donner une forme proche de celle de la pièce à réaliser, et le compactage de cette texture, afin d'obtenir le taux volumique de fibres désiré.

La texture fibreuse, maintenue dans l'outillage, est placée dans un four dans lequel l'infiltration en phase vapeur est réalisée, à des températures contrôlées relativement élevées.

Le début de la densification réalise la consolidation de la texture par liaison des fibres entre elles. La texture présente alors une cohésion suffisante pour conserver sa forme et être manipulée, après retrait de l'outillage, en vue de poursuivre l'infiltration sans l'outillage.

Le matériau constitutif de la matrice a tendance à se déposer initialement en surface plutôt qu'à coeur de la texture, ce qui obture partiellement la porosité de surface dans les zones de celle-ci exposées au flux gazeux à travers les ouvertures de l'outillage. Aussi, après consolidation, une opérature d'usinage est souvent nécessaire pour procéder à l'écroûtage de la texture, c'est-à-dire éliminer les parties de surface où le matériau de la matrice s'est accumulé de façon trop importante, afin de rendre à nouveau aisément accessible la porosité à coeur.

L'utilisation de l'outillage entraîne des inconvénients.

Un outillage en graphite est coûteux à réaliser, en raison notamment de l'usinage qu'il nécessite, d'une part pour présenter la forme voulue, d'autre part pour ménager des ouvertures permettant l'accès à la texture à densifier aux gaz utilisés pour l'infiltration de la matrice.

En outre, du fait de leur encombrement et de leur masse, les outillages occupent une fraction non négligeable du volume utile du four et présentent une inertie thermique importante.

De plus, l'outillage masque partiellement la surface de la texture fibreuse, ce qui conduit à une densification non exactement uniforme ainsi qu'à un état de surface non homogène et irrégulier.

Aussi, la présente invention a-t-elle pour but de fournir un procédé grâce auquel les inconvénients ci-dessus liés à l'utilisation d'un outillage sont réduits de façon substantielle.

Ce but est atteint du fait que, conformément à l'invention, la conformation de la texture fibreuse est au moins en partie réalisée par application d'une strate ou bande déformable en un matériau bidimensionnel fibreux.

La strate ou bande peut être tendue sur la texture fibreuse, la tension étant ajustée en fonction du degré de compactage souhaité de la texture.

Le matériau constitutif de la strate ou bande peut être tissu, par exemple formé de fibres réfractaires.

Le maintien de la strate ou bande de conformation sur la texture peut être assuré par un surbobinage. Ce maintien peut être en variante réalisé par liaison de la strate ou bande avec un outillage rigide assurant une partie de la conformation de la texture, ou par bobinage de la bande sur la texture.

L'utilisation d'une strate ou bande de conformation permet une réduction de l'outillage, donc une diminution de son coût, de son encombrement et de sa masse. En outre, l'utilisation d'une strate ou bande en tissu laisse un accès régulier et aisé au flux gazeux pour l'infiltration de la texture, d'où une meilleure capacité à la densification et une densification plus homogène.

Avantageusement, la strate ou bande de conformation est en un matériau ayant un coefficient de dilatation différent de celui du matériau constitutif de la texture fibreuse.

La densification par infiltration chimique en phase vapeur étant réalisée à une température relativement élevée, la différence de dilatation entre la strate ou bande de conformation et la texture fibreuse se traduit, pendant la phase de refroidissement qui suit l'infiltration, par des ruptures au niveau des zones d'interface texture-strate ou bande de conformation co-infiltrées par la matrice. En fin de phase de consolidation de la texture, la bande ou strate de conformation peut donc être facilement séparée de la texture. La suppression de la strate ou bande de conformation élimine le dépôt de surface qui se fait en grande partie sur celle-ci. Par conséquent, la porosité à coeur est aisément accessible pour la poursuite de la densification, sans qu'il soit nécessaire de procéder à un écroûtage. En outre, on obtient un état de surface homogène et régulier.

L'invention sera mieux comprise à la lecture de la description faite ci-après à titre indicatif, mais non limitatif, en référence aux dessins annexés sur lesquels :
- la figure 1 est une vue schématique en perspective illustrant un mode de réalisation du procédé selon l'invention pour réaliser une pièce en matériau composite ayant une forme de portion de cylindre ;
- la figure 2 est une vue schématique en perspective illustrant un mode de réalisation du procédé selon l'invention pour réaliser une pièce en matériau composite en forme de cylindre ;
- la figure 3 est une vue schématique en perspective illustrant un autre mode de réalisation du procédé selon l'invention pour réaliser une pièce en matériau composite en forme de cylindre ;
- la figure 4 est une vue schématique en coupe illustrant un autre mode de réalisation du procédé selon l'invention pour réaliser deux pièces en matériau composite en forme de portion de cylindre ;
- la figure 5 est une vue schématique en coupe illustrant un autre mode de réalisation du procédé selon l'invention pour réaliser une pièce profilée en matériau composite ayant une forme complexe avec au moins une partie concave ; et
- les figures 6 et 7 sont des vues schématiques en perspective illustrant encore deux autres modes de réalisation du procédé selon l'invention pour réaliser une pièce en matériau composite en forme de calotte.

La description qui suit est faite dans le cadre de la réalisation de pièces en matériau composite C-C ou en CMC, ce qui constitue un domaine d'application privilégié de l'invention.

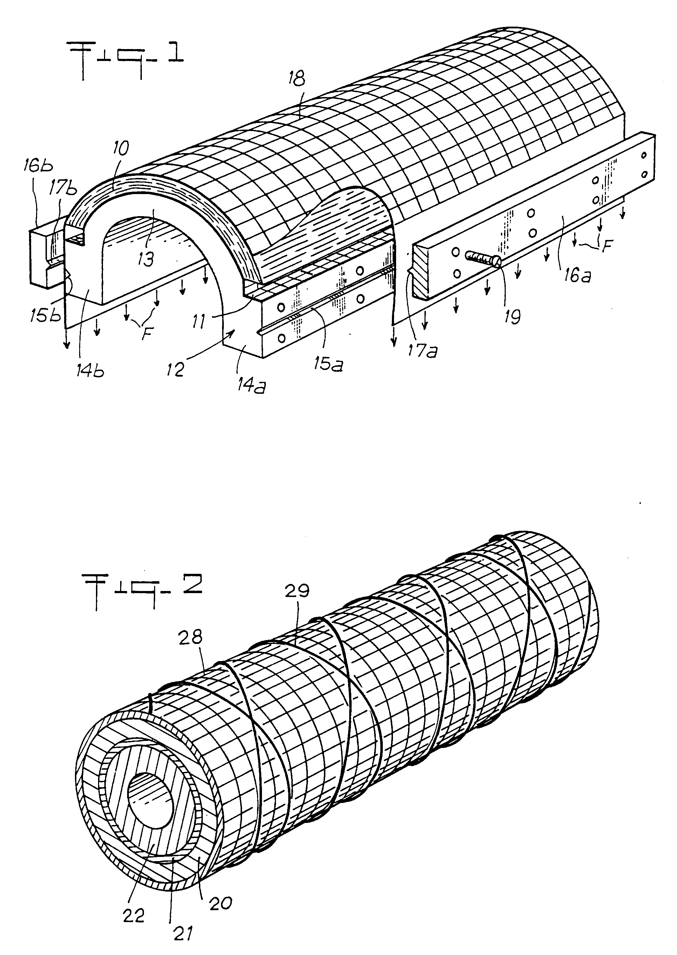

La figure 1 illustre la conformation d'une texture fibreuse 10 en vue de réaliser une pièce en matériau composite en forme de portion de cylindre, ici une portion de cylindre s'étendant sur un arc de moins de 180°.

La texture 10 est en fibres réfractaires choisies par exemple parmi les fibres en carbone et les fibres en céramique (carbure de silicium, nitrure de bore, alumine, zircone,...).

La texture 10 peut être constituée par un empilement de couches ou strates bidimensionnelles, par exemple en tissu, et est conformée entre un élément d'outillage rigide, ou conformateur 12 et une strate de conformation 18 tendue sur la texture 10 et bloquée sur le conformateur 12.

Les couches empilées formant la texture 10 peuvent être liées entre elles au moyen de fibres formant un angle non nul par rapport aux faces de la texture. La liaison peut être réalisée préalablement sur les couches empilées à plat, au moyen de fils implantés perpendiculairement aux couches empilées ou par aiguilletage. Un procédé d'implantation de fils est décrit dans le document FR-A-2 565 262, tandis que des procédés permettant la réalisation de textures fibreuses planes aiguilletées sont décrits dans les documents FR-A-2 584 106 et FR 88 13 132.

Le conformateur 12 comprend une partie centrale 13 en forme de portion de cylindre correspondant à la forme à donner à la texture 10. Les couches empilées constituant cette texture sont empilées sur la surface supérieure de la partie centrale 13. Le long des bords longitudinaux parallèles de cette partie centrale, le conformateur 12 présente des rebords 14a, 14b.

La strate de conformation 18 est constituée par une couche de tissu telle qu'un satin ou une toile, tendue sur la texture 10. La tension exercée sur la strate 18 est ajustée en fonction du degré de compactage à appliquer à la texture 10 pour obtenir le taux volumique de fibres souhaité (c'est-à-dire le pourcentage du volume apparent de la texture effectivement occupé par les fibres). La tension exercée sur la strate 18 est répartie uniformément le long de ses bords longitudinaux (comme le montrent les flèches F sur la figure 1).

Tout en étant maintenue sous la tension voulue, la strate 18 est bloquée sur le conformateur 12. A cet effet, les bords de la strate 18 sont enserrés entre les rebords 14a, 14b du conformateur 12 et des barres 16a, 16b vissées sur ces rebords au moyen de vis 19. Comme le montre la figure 1, les rebords 14a, 14b présentent des rainures longitudinales 15a, 15b à section en V qui coopèrent avec des nervures correspondantes 17a, 17b formées sur les barres 16a, 16b afin de bloquer la strate par coincement au fond des rainures 15a, 15b. Bien entendu, tout autre système de blocage de la strate 18 sur le conformateur 12 pourrait être utilisé.

Le conformateur 12 est par exemple réalisé en graphite et présente de multiples ouvertures (non représentées) à travers sa partie centrale 13 pour permettre le passage du flux gazeux lors de l'infiltration en phase vapeur. Les barres 16a, 16b et vis 19 sont également en graphite.

La strate 18 est en un matériau ayant un coefficient de dilatation thermique différent de celui du matériau constitutif de la texture 10. Ainsi, lorsque la texture 10 est en carbone, on peut utiliser une strate de conformation 18 constituée soit par un tissu de fibres réfractaires autres qu'en carbone, par exemple un tissu en carbure de silicium, soit par un tissu en fibres de carbone modifié par dépôt sur les fibres d'un matériau réfractaire autre que le carbone, par exemple un matériau céramique tel que du carbure de silicium. Par contre, lorsque la texture à densifier densifier est en céramique ou autre matériau réfractaire différent du carbone, on peut utiliser une strate de conformation en un tissu de fibres en carbone.

La texture 10, maintenue compactée entre le conformateur 12 et la strate 18, est soumise à une consolidation par infiltration chimique en phase vapeur du matériau constitutif de la matrice. Des procédés d'infiltration chimique en phase vapeur sont décrits notamment dans le document US-A-3 895 084 pour la fabrication de pièces en composite C-C, et dans le document FR-A-2 401 888 pour la fabrication de pièces en CMC.

L'infiltration chimique en phase vapeur étant réalisée à une température relativement élevée, la différence de dilatations entre la texture 10 et la strate 18 se traduit, pendant le refroidissement qui suit la consolidation, par des ruptures au niveau de l'interface entre la texture et la strate de conformation qui sont co-infiltrées.

Après consolidation, la texture 10 partiellement densifiée peut être dégagée de son outillage de maintien pour la poursuite de la densification. Un écroûtage de la texture consolidée n'est pas nécessaire au moins à sa surface qui était en contact avec la strate de conformation. Cette surface présente en outre un état homogène et régulier.

Lors de la mise en place de la texture 10 sur le conformateur 12, il pourra être avantageux de disposer entre la partie centrale 13 du conformateur et la texture fibreuse 10 une strate d'interposition 11 conformément au procédé décrit dans la demande de brevet français n° 8915929 du 1er décembre 1989 au non de la déposante. La strate d'interposition 11 est par exemple formée par une couche de tissu et est réalisée en un matériau ayant un coefficient de dilatation thermique différent de celui du matériau constitutif de la texture 10. Les strates 11 et 18 pourront être constituées par un même tissu.

Comme pour la strate de conformation 18, l'effet de dilatation différentielle entre la texture 10 et la strate d'interposition 11 amène, pendant la phase de refroidissement qui suit l'infiltration, des ruptures naturelles de la matrice à l'interface entre la texture 10 et la strate d'interposition 11. De la sorte, et du fait aussi que la strate d'interposition 11 réduit les contacts entre les fibres de la texture 10 et la surface du conformateur 12, la texture 10 peut être facilement extraite du conformateur 12. En outre, la décohésion entre la texture 10 et la strate d'interposition 11 fait qu'un éventuel écroûtage de la surface de la texture 10 tournée vers le conformateur 12 n'est pas nécessaire après consolidation de la texture.

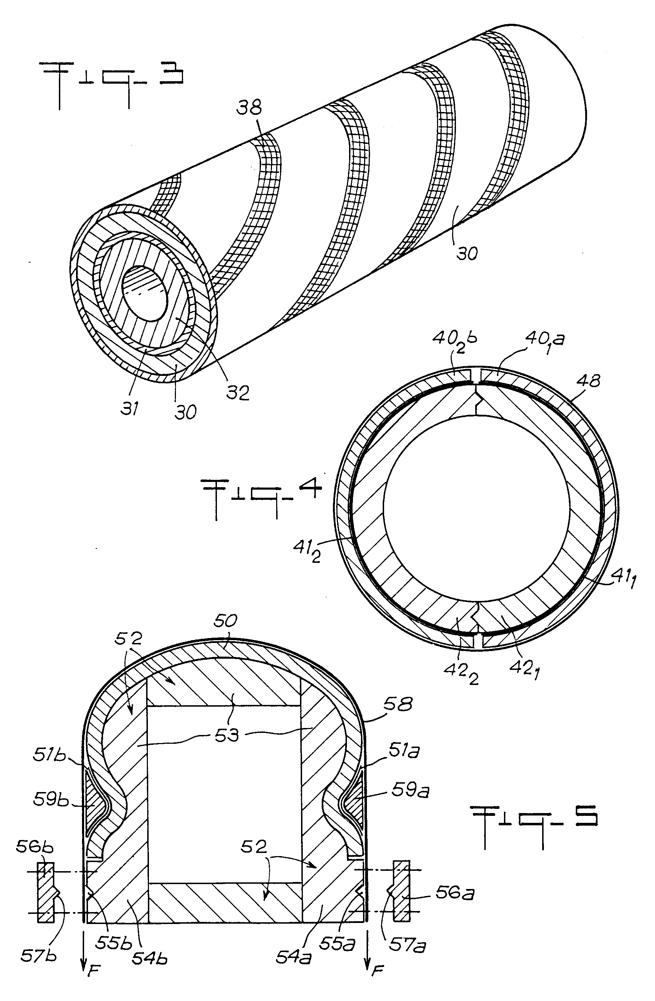

D'autres modes de réalisation du procédé selon l'invention utilisant une strate ou bande de conformation seront maintenant décrits, de façon plus succinte en référence aux figures 2 à 7. Dans tous ces modes de réalisation, la conformation et le compactage éventuel de la texture fibreuse sont produits au moyen d'une strate ou bande de conformation sous forme d'une texture bidimensionnelle, telle qu'un tissu, en un matériau dont le coefficient de dilatation thermique est différent de celui du matériau constitutif de la texture fibreuse. Il en est de même pour le matériau constitutif de strates d'interposition qui sont éventuellement utilisées.

La figure 2 montre une texture fibreuse cylindrique 20 maintenue entre un conformateur cylindrique rigide creux 22 et une strate de conformation 28.

La texture 20 est par exemple formée par bobinage d'une bande de tissu sur le conformateur 22 muni d'une strate d'interposition 21.

La strate de conformation 28 est une bande de tissu enroulée sur la texture 20, en formant une seule couche, et maintenue par surbobinage d'un fil 29. Celui-ci est en un matériau réfractaire (carbone ou céramique) non nécessairement analogue à celui de la strate de conformation 28.

La bande de tissu formant la texture 20 peut être enroulée sous tension, afin de réaliser le compactage voulu de la texture ; le maintien à l'état compacté étant assuré par la strate de conformation 28 et le fil 29. Le bobinage du fil 29 est réalisé hélicoïdalement avec un pas important de manière à réaliser un surbobinage léger juste suffisant pour maintenir la texture 10 et la strate de conformation 28.

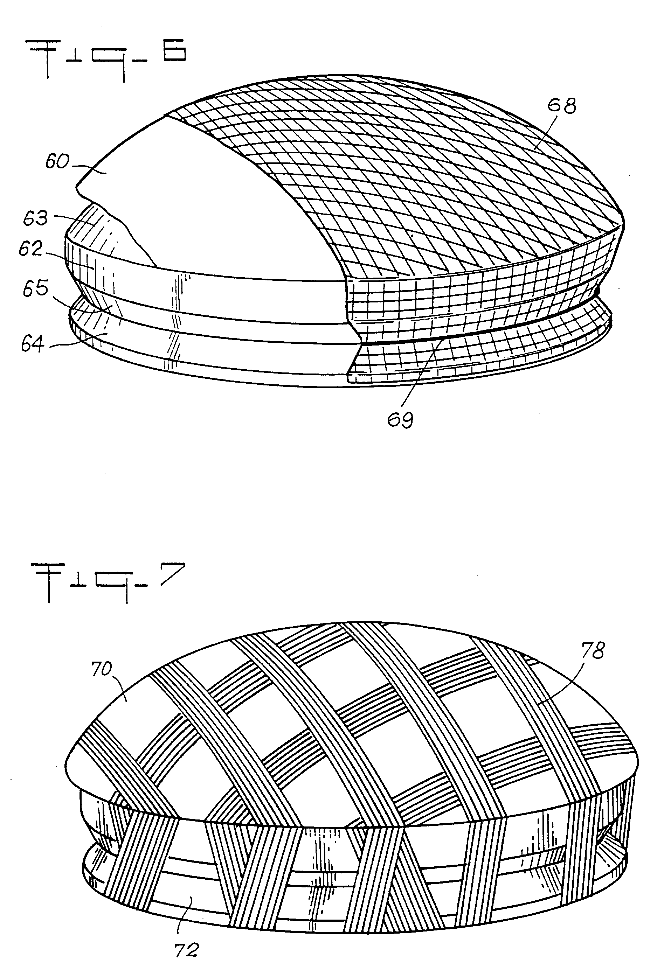

La figure 3 montre également une texture fibreuse cylindrique 30 formée par enroulement d'une bande de tissu sur un conformateur rigide cylindrique creux 32 muni d'une strate d'interposition 31.

Le maintien de la texture 30 est assuré par une bande de conformation 38. Celle-ci est constituée par une bande de tissu, ou un ruban, de largeur inférieure à celle de la texture 30.

La bande de conformation est bobinée sur la texture 30 pour former des spires hélicoïdales. Le bobinage de la bande 38 peut être réalisé de façon relativement légère (spires non jointives) tout en assurant efficacement le maintien de la texture 30.

La figure 4 montre deux textures fibreuses 40₁, 40₂ en forme de portions de cylindre enserrées entre un conformateur rigide cylindrique creux et une strate de conformation 48. Les textures 40₁, 40₂ s'étendent chacune sur un arc inférieur ou égal à 180°. Le conformateur est constitué de deux demi-coquilles semi-cylindriques 42₁, 42₂ identiques raccordées pour former un cylindre. Chaque demi-coquille 42₁, 42₂ porte une texture fibreuse respective 40₁, 40₂ de laquelle elle est séparée par une strate d'interposition 41₁, 41₂.

Dans l'exemple illustré par la figure 5, la texture fibreuse 50 a la forme d'un profilé à section droite sensiblement en et est maintenue entre un conformateur rigide 52 et une strate de conformation 58.

Le conformateur rigide 52 est en plusieurs parties assemblées pour présenter, dans sa partie centrale 53, un profil en correspondant à celui à conférer à la texture fibreuse 50.

La strate 58 est constituée par une couche de tissu tendue sur la texture 50 pour conférer à celle-ci le degré de compactage voulu. La strate 58, maintenue à l'état tendu, est bloquée sur le conformateur rigide 52. A cet effet, comme dans le mode de réalisation de la figure 1, les bords de la strate 58 sont bloqués entre des rebords longitudinaux 54a, 54b du conformateur 52 et des barres 56a, 56b vissées sur ces rebords. La strate 58 est pincée au moyen de nervures longitudinales 57a, 57b portées par les barres 56a, 56b et coopérant avec des rainures 55a, 55b formées dans les rebords 54a, 54b.

Afin d'assurer la conformation de la texture 50 dans ses parties en creux (ou concaves), des inserts 59a, 59b sont intercalés entre la strate 58 et la texture 50, des strates d'interposition 51a, 51b étant disposées entre les inserts 59a, 59b et la texture 50. Les inserts 59a, 59b sont des profilés ayant, d'un côté, une surface dont la forme convexe correspond à la forme des parties en creux de la texture 50 et, de l'autre côté, une section plane ou convexe sur laquelle s'appuie la strate de conformation 58.

La figure 6 montre une texture fibreuse 60 en forme de calotte sphérique enserrée entre un conformateur rigide 62 et une strate de conformation 68.

Le conformateur 62 présente une partie supérieure 63, dont la surface a une forme de calotte sphérique correspondant à celle à conférer à la texture 60, et une base 64 avec une rainure annulaire 65 formée sur son pourtour.

La strate de conformation 68 est un tissu à mailles déformables, par exemple une tresse à plat, qui est tendu sur la texture 60, celle-ci étant formée par un empilement de couches de tissu.

La tension de la strate de conformation 68 est ajustée en fonction du degré de compactage à conférer à la texture 60. La strate 68, maintenue à l'état tendu, est bloquée sur le conformateur 62 par une ligature 69, au niveau de la rainure 65 de la base du conformateur.

La figure 7 montre une texture fibreuse 70, également en forme de calotte sphérique, appliquée sur un conformateur 72, la texture 70 et le conformateur 72 étant analogues respectivement à la texture 60 et au conformateur 62 du mode de réalisation de la figure 6.

L'application de la texture 70 sur le conformateur 72 est réalisée par bobinage d'une bande de conformation 78. Celle-ci est constituée par une bande de tissu, ou un ruban, qui est bobinée autour de l'ensemble formé par le conformateur 72 et la texture 70, le bobinage étant réalisé suivant plusieurs directions différentes.

Dans ce qui précède, il a été envisagé de réaliser un compactage de la texture fibreuse au moyen d'une tension mécanique exercée sur la strate ou bande de conformation.

En variante, le matériau constitutif de la strate ou bande de conformation peut être choisi de manière à permettre un compactage de la texture fibreuse par voie non-mécanique, par exemple par thermo-rétractation.

Un matériau thermo-rétractable susceptible de convenir est un matériau précurseur du carbone tel qu'un polyacrylonitrile (P.A.N.). Celui-ci, traité thermiquement après sa mise en place sur la texture fibreuse, réalise le compactage de celle-ci du fait du retrait du P.A.N. à haute température.

## Revendications

1. Procédé de fabrication d'une pièce en matériau composite comportant une texture fibreuse de renfort densifiée par une matrice, procédé comprenant la conformation de la texture fibreuse de renfort suivie de la densification de la texture par infiltration chimique en phase gazeuse du matériau constitutif de la matrice au sein de la porosité de la texture,
caractérisé en ce que la conformation de la texture fibreuse est au moins en partie réalisée par application sur celle-ci d'une strate ou bande déformable en un matériau bidimensionnel fibreux, laquelle strate ou bande est séparée de la texture après une phase de consolidation par infiltration chimique en phase gazeuse.

2. Procédé selon la revendication 1, caractérisé en ce que la strate ou bande est tendue sur la texture fibreuse.

3. Procédé selon la revendication 2, caractérisé en ce que la tension de la strate ou bande est ajustée en fonction d'un degré de compactage souhaité de la texture fibreuse.

4. Procédé selon l'une quelconque des revendications 1 à 3, caractérisé en ce que la strate ou bande est en un matériau ayant un coefficient de dilatation différent de celui du matériau constitutif de la texture fibreuse.

5. Procédé selon l'une quelconque des revendications 1 à 4, caractérisé en ce que la strate ou bande est en tissu de fibres réfractaires.

6. Procédé selon l'une quelconque des revendications 1 à 5, caractérisé en ce que la strate ou bande est maintenue appliquée contre la texture par surbobinage.

7. Procédé selon l'une quelconque des revendications 1 à 6, caractérisé en ce que la conformation de la texture fibreuse est en partie réalisée au moyen d'un outillage rigide auquel la strate ou bande de conformation est liée.

8. Procédé selon la revendication 7, caractérisé en ce qu'entre la texture fibreuse et l'outillage rigide est disposée une strate d'interposition en un matériau réfractaire ayant un coefficient de dilatation différent de celui du matériau constitutif de la texture.

9. Procédé selon l'une quelconque des revendications 1 à 8, caractérisé en ce que la conformation de la texture fibreuse est au moins en partie réalisée au moyen d'une bande bobinée sur la texture.

10. Procédé selon l'une quelconque des revendications 1 à 9, caractérisé en ce que la conformation de la texture fibreuse est réalisée au moins en partie au moyen d'une strate ou bande en un matériau rétractable par traitement thermique.

11. Procédé selon l'une quelconque des revendications 1 à 10, caractérisé en ce qu'au moins un insert est interposé entre la strate ou bande de conformation et la texture fibreuse, au niveau d'une partie concave de la forme à donner à la texture fibreuse.

## Claims

1. Method for the manufacture of a composite material part comprising a fibrous reinforcement texture densified by a matrix, which method comprises shaping the fibrous reinforcement texture, followed by densification of the texture by chemical vapor infiltration of the material constituting the matrix through the porosity of the texture, characterized in that shaping of the fibrous texture is at least partly achieved by applying thereon a deformable layer or strip in a two-dimensional fibrous material, which layer or strip is separated from the texture after a phase of consolidation by chemical vapor infiltration.

2. Method according to claim 1, characterized in that the layer or strip is stretched over the fibrous texture.

3. Method according to claim 2, characterized in that the tension of the layer or strip is adjusted as a function of the degree of compaction wanted for the fibrous texture.

4. Method according to anyone of claims 1 to 3, characterized in that the layer or strip is made from a material having a thermal expansion coefficient different from that of the constituent material of the fibrous texture.

5. Method according to anyone of claims 1 to 4, characterized in that the layer or strip is in a cloth of refractory fibers.

6. Method according to anyone of claims 1 to 5, characterized in that the layer or strip is held in position against the texture by being wound over.

7. Method according to anyone of claims 1 to 6, characterized in that shaping of the fibrous texture is partly achieved by means of a rigid tool to which the shaping layer or strip is connected.

8. Method according to claim 7, characterized in that between the fibrous texture and the rigid tool, there is provided an inserted layer in a refractory material having a thermal expansion coefficient different from that of the constituent material of the texture.

9. Method according to anyone of claims 1 to 8, characterized in that shaping of the fibrous texture is at least partly achieved by means of a strip wound around the texture.

10. Method according to anyone of claims 1 to 9, characterized in that shaping of the fibrous texture is at least partly achieved by means of a layer or strip in a thermo-retractable material.

11. Method according to anyone of claims 1 to 10, characterized in that at least one insert is inserted between the shaping layer or strip and the fibrous texture, at the level of a concave portion of the shape to be given to the texture.

## Patentansprüche

1. Verfahren zur Herstellung eines Verbundwerkstoffteils, bestehend aus einem durch eine Matrix verfestigten, faserigen Verstärkungsgefüges, umfassend die Herstellung des faserigen Verstärkungsgefüge, gefolgt von der Verdichtung des Gefüges durch chemische Infiltration in der Gasphase des Grundmaterials der Matrix innerhalb der Porösität des Gefüges,
**dadurch gekennzeichnet**, daß
die Formgebung des faserigen Gefüges wenigstens teilweise dadurch erfolgt, daß auf ihm eine verformbare Schicht oder ein verformbares Band aus einem zweidimensionalen Fasermaterial aufgebracht wird, welche Schicht bzw. welches Band von dem Gefüge nach eine Befestigungsphase durch chemische Infiltration in der Gasphase getrennt wird.

2. Verfahren nach Anspruch 1,
**dadurch gekennzeichnet**, daß
die Schicht, bzw. das Band über das faserige Gefüge gespannt wird.

3. Verfahren nach Anspruch 2,
**dadurch gekennzeichnet**, daß
die Spannung der Schicht bzw. des Bandes in Abhängigkeit von einem Sollverdichtungsgrad des faserigen Gefüges eingestellt wird.

4. Verfahren nach einem der Ansprüche 1 - 3,
**dadurch gekennzeichnet**, daß
die Schicht bzw. das Band aus einem Material besteht, das einen Wärmedehnungskoeffizienten hat, der von dem des Grundmaterials des faserigen Gefüges verschieden ist.

5. Verfahren nach einem der Ansprüche 1 - 4,
**dadurch gekennzeichnet**, daß
die Schicht bzw. das Band aus einem Gewebe aus hitzebeständigen Fasern besteht.

6. Verfahren nach einem der Ansprüche 1 - 5,
**dadurch gekennzeichnet**, daß
die Schicht bzw. das Band auf das Gefüge durch Überwickeln aufgebracht gehalten wird.

7. Verfahren nach einem der Ansprüche 1 - 6,
**dadurch gekennzeichnet**, daß
die Formgebung des faserigen Gefüges teilweise mittels eines starren Werkzeuges erfolgt, mit dem die Formgebungsschicht, bzw. das -band verbunden wird.

8. Verfahren nach Anspruch 7,
**dadurch gekennzeichnet**, daß
zwischen dem faserigen Gefüge und dem starren Werkzeug eine Zwischenschicht aus einem hitzebeständigen Material angeordnet wird, das einen Wärmedehnungskoeffizienten hat, der von dem des Grundmaterials des Gefüges verschieden ist.

9. Verfahren nach einem der Ansprüche 1 - 8,
**dadurch gekennzeichnet**, daß
die Formgebung des faserigen Gefüges wenigstens teilweise mittels eine auf das Gefüge gewickelten Bandes erfolgt.

10. Verfahren nach einem der Ansprüche 1 - 9,
**dadurch gekennzeichnet**, daß
die Formgebung des faserigen Gefüges wenigstens teilweise mittels einer Schicht bzw. einem Band aus einem durch Wärmebehandlung zurückziehbaren Material erfolgt.

11. Verfahren nach einem der Ansprüche 1 - 10,
**dadurch gekennzeichnet**, daß
wenigstens ein Einsatz zwischen der Formgebungsschicht bzw. dem -band und dem faserigen Gefüge in Höhe eines konkaven Teils der dem faserigen Gefüge zu verleihenden Form angeordnet wird.
